# EUROPEAN PATENT SPECIFICATION

(11) **EP 4 261 090 B1**
(45) Date of publication and mention of the grant of the patent: **22.10.2025**
(21) Application number: 22168288.3
(22) Date of filing: 14.04.2022
(51) Int. Cl.: B60T 17/08

(54) **PARKING BRAKE ACTUATOR FOR A PARKING BRAKE OF A VEHICLE AND BRAKE COMPRISING SUCH A PARKING BRAKE ACTUATOR**
FESTSTELLBREMSAKTUATOR FÜR EINE FESTSTELLBREMSE EINES FAHRZEUGS UND BREMSE MIT EINEM SOLCHEN FESTSTELLBREMSAKTUATOR
ACTIONNEUR DE FREIN DE STATIONNEMENT D'UN FREIN DE STATIONNEMENT D'UN VÉHICULE ET FREIN COMPRENANT UN TEL ACTIONNEUR DE FREIN DE STATIONNEMENT

(43) Date of publication of application: 18.10.2023
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)
(74) Representative: Prüfer & Partner mbB Patentanwälte · Rechtsanwälte

(56) References cited:
- AU-A1- 2009 201 856
- DE-A1- 1 555 308
- DE-A1- 2 511 516
- GB-A- 2 268 230
- US-A- 3 272 566
- US-A- 3 508 469

## Description

The invention relates to a parking brake actuator for a parking brake of a vehicle and a brake comprising such a parking brake actuator, in particular, a parking brake actuator of a spring-loaded parking brake for a commercial vehicle.

Nowadays, in commercial vehicles, a parking brake function is realized for disc brakes as a so-called spring brake portion. When the parking brake is actuated, an actuator spring acts on a push rod which clamps the brake. For running the vehicle, the parking brake acting as a push spring is released by a pneumatic piston which compresses the actuator spring such that the push rod is retracted and the brake is released.

Due to a required stroke and actuation force of the actuator spring, the spring is designed with a specific length and stiffness which, in turn, depends on a spring diameter, a wire diameter and a stiffness of the material. Therefore, the actuator spring requires a defined installation space. However, due to an increasing number of components installed in the area of the brakes, the available installation space decreases so that it is necessary that the actuator springs require less installation space.

Furthermore, in case of wear of a brake lining or a brake disc, if the actuator spring has a steeply increasing spring characteristics, the spring force and, therefore, the braking force, are greatly reduced. Hence, an actuator spring having a flat spring characteristics is desirable which, however, is usually possible by increasing a length of the actuator spring.

Documents GB 2 268 230 A, US 3 508 469 A, US 3 272 566 A, DE 25 11 516 A1, DE 15 55 308 A1, and AU 2009 201 856 A1 disclose a brake actuator comprising the features according to the preamble of claim 1.

Therefore, the object underlying the invention is to remedy the above problems and disadvantages and to provide a parking brake actuator and a brake of a vehicle requiring small installation space and improving safety and durability of the parking brake.

The object is achieved by a parking brake actuator according to claim 1 and a brake according to claim 7.

Advantageous further developments are included in the dependent claims.

According to an aspect of the invention, a parking brake actuator comprises a fluid cylinder and a biasing means. The fluid cylinder comprises a cylinder housing, and a piston configured to close a fluid chamber in an inner space of the cylinder housing, wherein the piston is connectable to a brake lining of the brake. The biasing means is configured to apply a force to the brake lining in a first direction such that the brake lining is pressed to an element to be braked in order to generate a braking force, and the fluid cylinder is configured such that fluid pressure in the fluid chamber applies a pressure force to the piston in a second direction opposite to the first direction such that the braking force is released, wherein the biasing means is formed as a spring set comprising at least two springs.

The characteristic that the spring set applies a force to the brake lining such that the brake lining is pressed to an element to be braked is achieved by a mechanics attached to a brake caliper accommodating the brake lining, wherein one end of the spring set is immovably attached to a brake caliper and the other end of the spring set which is movable with respect to the brake caliper is connected to the brake lining via the mechanics such that the braking force is generated.

The characteristic that the fluid pressure in the fluid chamber of the fluid cylinder applies a pressure force to the piston in a second direction opposite to the first direction such that the braking force is released is achieved by the feature that the piston is connected to the movable end of the spring set. Therefore, by moving the piston by the fluid pressure in the second direction, the end of the spring set connected to the brake lining is also moved in the second direction and, thus, the brake force is released.

By the use of the spring set comprising at least two springs, a spring characteristic of the spring set can be more easily adapted to a required spring characteristic.

According to an advantageous implementation of the parking brake actuator, the at least two springs are configured to be arranged in a series arrangement.

Due to the series arrangement of the at least two springs, a gradient of the spring characteristics can be reduced with respect to the individual spring characteristic of the springs such that, while maintaining other characteristics for ensuring durability, wear of the brake lining and of the elements to be braked have less effect to the braking force. Therefore, safety is improved.

In a further advantageous implementation of the parking brake actuator, a spring direction is respectively defined for the at least two springs of the spring set from a first end portion to a second end portion of the individual springs of the spring set, the springs of the spring set are arranged such that the spring directions are aligned, and the spring set comprises an intermediate element configured to connect the second end portion of the first spring with the first end portion of the other spring such that the first end portion of the other spring is located at a place being opposite to the spring direction with respect to the second end portion of the first spring.

The first end of the other spring of the spring set can be connected to the second end of the first spring directly via the intermediate element. Nevertheless, one or more additional springs can be arranged between the first end of the other spring and the second end of the first spring in the same manner so that the first end of the other spring is connected to the second end of the first spring via the additional springs.

Due to this arrangement, a length of the spring set can be reduced since the individual springs of the spring set can be arranged, for example, side-by-side or nested within one another, so that the virtual length of the springs connected to one another is larger than the actual length of the spring set and a flat spring characteristic can be determined more easily so that the installation space can be minimized.

According to an example of a parking brake actuator, which is not covered by the claimed invention, the parking brake actuator has a spring space opposite to the fluid chamber with respect to the piston, and the spring set is arranged in the spring space and is configured to apply a compression force to the piston in the first direction.

By this arrangement, the spring space can be arranged in an arbitrary position as long as it is located opposite to the fluid chamber with respect to the piston so that the installation space of the parking brake actuator can be easily adapted to an available installation space while a force of the spring set can easily be increased.

In a further advantageous implementation of the parking brake actuator, the spring space is formed by the cylinder housing.

By the spring space formed by the cylinder housing, in particular, opposite to the fluid chamber with respect to the piston, the spring set is accommodated in the cylinder housing and, therefore, protected from external influences such as dust and dirt or damages without the need of a further housing or shielding.

According to the invention, the spring set is arranged in the fluid chamber and is configured to apply a tensile force in the first direction towards the piston.

Due to this arrangement, a size of the parking brake actuator can be further reduced since the spring space for installing the springs outside the fluid chamber can be omitted. Furthermore, also in this arrangement, the spring set is protected from external influences such as dust and dirt or damages.

Alternatively, according to the invention, the parking brake actuator has a spring space opposite to the fluid chamber with respect to the piston, and at least one tension spring of the spring set, which at least one tension spring is configured to apply a tensile force in the first direction to the piston, is arranged in the fluid chamber, and at least one compression spring of the spring set, which at least one compression spring is configured to apply a compression force in the first direction to the piston, is arranged in the spring space.

By this arrangement, the space in the fluid cylinder can be utilized in an optimized manner so that the spring characteristics of the spring set can be suitably adapted while having a small size of the parking brake actuator.

In further advantageous implementations of the parking brake actuator, the piston comprises a piston rod connectable to the brake lining, and the spring set is configured to move the piston rod out of the cylinder housing such that the parking brake actuator is configured to act as a push type actuator or the spring set is configured to retract the piston rod into the cylinder housing such that the parking brake actuator is configured to act as a pull type actuator.

Depending on the installation situation, anyone of these implementations can provide an optimum solution for using the parking brake actuator, a brake lining and an element to be braked.

According to a further aspect of the invention, a brake of a vehicle comprises a parking brake actuator according to the invention.

Due to such a brake, the spring characteristic of the spring set can be more easily adapted to a required spring characteristic in order to provide a brake having a small installation space and a suitable spring characteristic.

Subsequently, the invention is elucidated by means of embodiments referring to the attached drawings.

In particular,
Fig. 1 shows a cross-sectional illustration of a portion of a brake of a vehicle provided with a parking brake actuator according to the state of the art;
Fig. 2 shows a principle cross-sectional illustration of a first type of the parking brake actuator, which is not covered by the claimed invention;
Fig. 3 shows a principle cross-sectional illustration of a second type of the parking brake actuator, which is not covered by the claimed invention;
Fig. 4 shows a principle cross-sectional illustration of a third type of the parking brake actuator according to the claimed invention; and
Fig. 5 shows a principle cross-sectional illustration of a fourth type of the parking brake actuator according to the claimed invention.

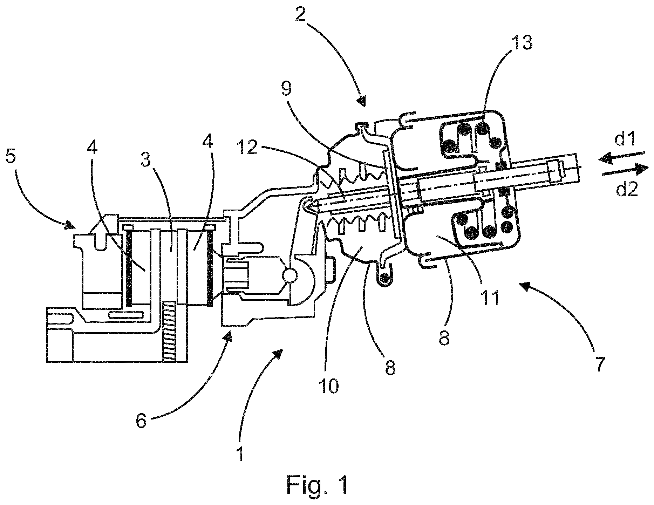

**Fig. 1** shows a cross-sectional illustration of a portion of a brake 1 of a vehicle provided with a parking brake actuator 2 according to the state of the art. The brake 1 further comprises a brake disc 3 as an element to be braked and two brake linings 4.

Furthermore, the brake 1 comprises a mechanics 5 for transmitting a force generated by the parking brake actuator 2 to the brake linings 4.

The parking brake actuator 2 is attached to a brake caliper 6 of the brake 1 such that the brake actuator 2 is immovable with respect to the brake caliper 6. The brake caliper 6 further accommodates the brake linings 4. In other types of brakes, only one brake lining 4 or more than two brake linings 4 are provided.

The parking brake actuator 2 comprises a fluid cylinder 7 comprising a cylinder housing 8 and a piston 9. The piston 9 closes a fluid chamber 10 in an inner space of the cylinder housing 8. Opposite to the fluid chamber 10 with respect to the piston 9, a spring space 11 is provided. The spring space 11 is formed by a portion of the cylinder housing 8. In the parking brake actuator 2, the piston 9 is formed by a diaphragm fixed to the cylinder housing 8.

The piston 8 comprises a piston rod 12 which is connected to the brake linings 4 by means of the mechanics 5. The mechanics 5 comprises a pivotable lever. In other types of parking brake actuators 2, the piston 9 can be connected to the brake lining 4 by a mechanics having other components, in particular, the piston rod 12 can directly apply the force to the brake lining 4.

The parking brake actuator 2 comprises one spring 13 which applies a spring force in a first direction d1 to the brake lining 4 via the mechanics 5 such that the brake lining 4 is pressed to the brake disc 3 being the element to be braked in order to generate a braking force.

The fluid cylinder 7 is configured such that fluid pressure in the fluid chamber 10 applies a pressure force to the piston 9 in a second direction d2 opposite to the first direction d1 such that the braking force is released. When increasing a pressure of the fluid, in particular, of air, such that the pressure force to the piston 9 exceeds the spring force of the spring 13, the piston 9 is moved in the second direction d2 in order to release the braking force.

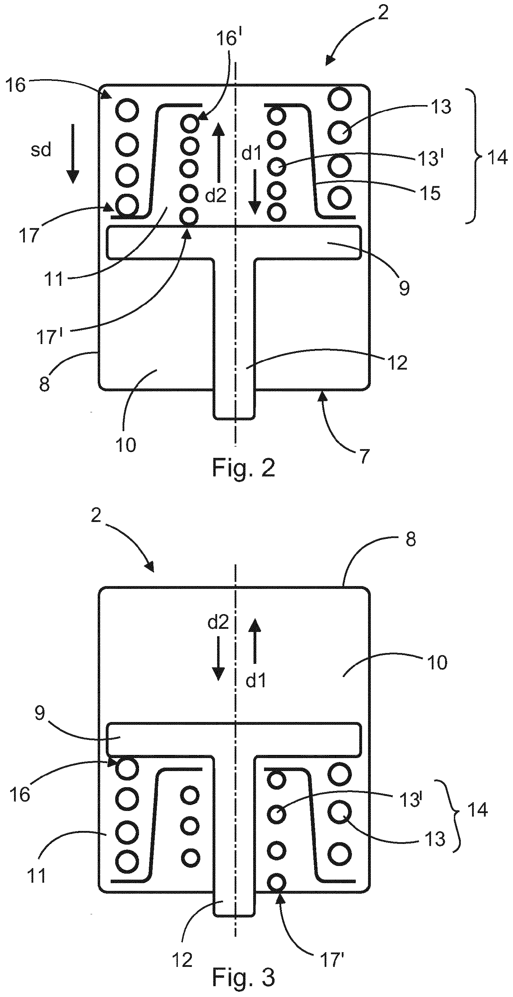

**Fig. 2** shows a principle cross-sectional illustration of a first type of the parking brake actuator 2, which is not covered by the claimed invention.

The parking brake actuator 2 comprises the piston 9 which tightly closes the fluid chamber 10 in the inner space of the cylinder housing 8 of the fluid cylinder 7, wherein the piston 9 is provided with the piston rod 12. The spring space 11 opposite to the fluid chamber 10 with respect to the piston 9 is formed by the cylinder housing 8. In alternative embodiments, the spring space 11 can be formed not by the cylinder housing 8 but by another housing, or no housing is provided such that the spring space 11 is not shielded from the surrounding.

The parking brake actuator 2 is provided with a biasing means formed as a spring set 14 comprising two springs 13, 13'. Furthermore, the spring set 14 comprises an intermediate element 15.

The two springs 13, 13' are arranged in a series arrangement. This series arrangement is achieved in that the springs 13, 13' respectively have a first end portion 16, 16' and a second end portion 17, 17'. A spring direction sd is defined from the first end portion 16, 16' to the second end portion 17, 17' of the individual springs 13, 13' of the spring set 14. The springs 13, 13' are arranged such that the spring directions sd are, in particular, aligned in parallel. The first end portion 16 of the first spring 16 is connected to the cylinder housing 8, in particular, it supports the spring on the cylinder housing 8. The second end portion 17' of the second spring 13' is connected to the brake lining 4 (Fig. 1) in particular, the second end portion 17' of the second spring 13' supports on the piston 9 and is connected to the brake lining 4 via the piston rod 12 since the piston rod 12 is connected to the brake lining 4. The second end portion 17 of the first spring 13 is connected to the intermediate element 15 and the first end portion 16' of the second spring 13' is also connected to the intermediate element 15. Therefore, the intermediate element 15 is configured to connect the second end portion 17 of the first spring 13 with the first end portion 16' of the second spring 13' such that the first end portion 16' of the second spring 13' is located at a place being opposite to the spring direction sd with respect to the second end portion 17 of the first spring 13. As shown in Fig. 2, the two springs 13, 13' are arranged concentrically, nevertheless, in alternative embodiments, the two springs 13, 13' can be arranged side-by-side or nested within one another in another manner. In further alternative embodiments, more than two springs 13, 13' can be provided in the spring set 14 and/or the intermediate element 15 is omitted and the springs 13, 13' are accordingly shaped in order to achieve such an arrangement.

The spring set 14 is arranged in the spring space 11 and the two springs 13, 13' are formed as compression springs such that the spring set 14 is configured to apply a compression force in the first direction d1 to the piston 9 and, thereby, the compression force moves the piston rod 12 out of the cylinder housing 8. Therefore, the parking brake actuator 2 of this type is a push type actuator.

In an alternative embodiment, the spring set 14 is provided with accordingly attached tensile springs and the spring set 14 is arranged in the fluid chamber 10 such that the parking brake actuator 2 is also a push type actuator.

**Fig. 3** shows a principle cross-sectional illustration of a second type of the parking brake actuator 2, which is not covered by the claimed invention.

This type of the parking brake actuator 2 differs from the type shown in Fig. 2 in the arrangement of the spring space 11 and the fluid chamber 10 which are interchanged. Furthermore, in this embodiment, the first end portion 16 of the first spring 13 does not support the spring on the cylinder housing 8 but it is connected to the piston 9 and supports the spring on the piston 9 and the second end portion 17' of the second spring 13' does not support the spring on the piston 9 but it is connected to the cylinder housing 8 and supports the second spring 13' on the cylinder housing 8. Therefore, the spring set 14 is configured to apply a compression force in the first direction d1 to the piston 9. When the fluid pressure is reduced so that the spring force of the spring set 14 exceeds the force by the fluid pressure, the spring set 14 retracts the piston rod 12 in order to actuate the parking brake. Therefore, the parking brake actuator 2 of this type is a pull type actuator. In an alternative embodiment, the spring set 14 is provided with tensile springs and the spring set 14 is arranged in the fluid chamber 10 such that the parking brake actuator 2 is also a pull type actuator.

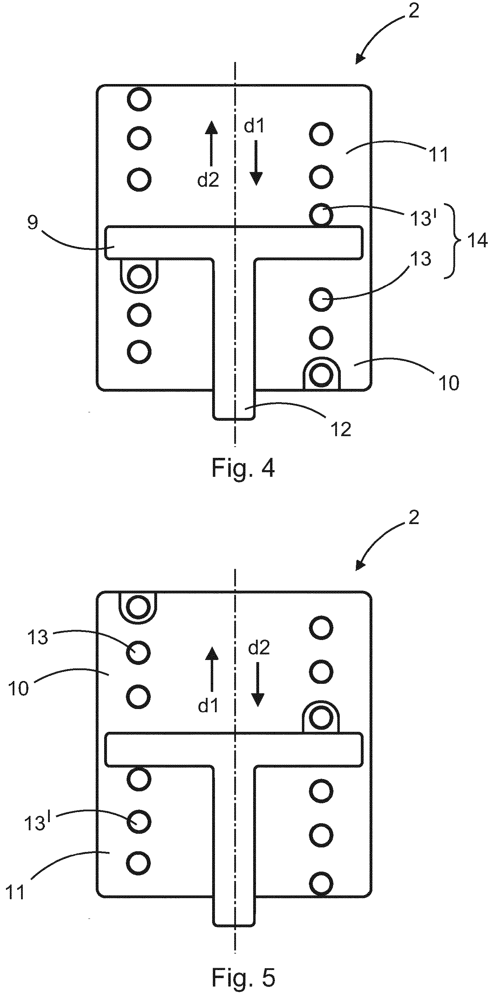

**Fig. 4** shows a principle cross-sectional illustration of a third type of the parking brake actuator 2 according to the claimed invention. This type differs from the above-described types in that one of the springs of the spring set 14, particularly the spring 13 as being a tension spring, is arranged in the fluid chamber 10 and another one of the springs of the spring set 14, particularly the spring 13' as being a compression spring, is arranged in the spring space 11.

In this embodiment, with one end, the spring 13' is supported on the cylinder housing 8 and, with the other end, the spring 13' is supported on the piston 9. The spring 13' is configured to apply a compression force in the first direction d1 to the piston 9. One end of the spring 13 is connected to the piston 9 and the other end of the spring 13 is connected to the cylinder housing 8. The spring 13 is configured to apply a tensile force in the first direction d1 to the piston 9. Therefore, the two springs 13, 13' are arranged in a parallel arrangement and the spring set 14 is configured to move the piston rod 12 out of the cylinder housing 8. Hence, the parking brake actuator 2 of this type is configured to be a push type actuator.

**Fig. 5** shows a principle cross-sectional illustration of a fourth type of the parking brake actuator 2 according to the claimed invention.

The type of the parking brake actuator 2 shown in Fig. 5 differs from the type of the parking brake actuator 2 shown in Fig. 4 in the arrangement of the fluid chamber 10 and the spring space 11 which are interchanged. The spring 13 as being the tension spring is also arranged in the fluid chamber 10 and the spring 13' as being the compression spring is also arranged in the spring space 11. However, in this type of the parking brake actuator 2, the spring set 14 retracts the piston rod 12 in the direction d1 into the cylinder housing 8 so that the parking brake actuator 2 is configured as a pull type actuator.

In use, starting with an actuated parking brake, the spring set 14 applies a force to the piston 9 in the first direction d1 such that the brake lining 4 is pressed to the brake disc 3 in order to generate the braking force.

For releasing the parking brake, the fluid pressure in the fluid chamber 10 is increased and when the force applied to the piston 9 by the fluid pressure exceeds the spring force applied by the spring set 14, the piston 9 moves in the direction d2 and, therefore, releases the braking force.

When using the types of the parking brake actuator 2 shown in Figs. 2 and 3, the spring characteristics of the spring set 14 can easily be adapted such that it is flat since a greater length of the springs 13, 13' of the spring set 14 can be achieved without extending the length of the spring set 14.

When using the types of the parking brake actuator 2 shown in Figs. 4 and 5, the spring force of the spring set 14 can be increased without enlarging the required installation space of the parking brake actuator 2 since the fluid camber 10 as well as the spring space 11 are used for accommodating the springs 13, 13'.

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

### LIST OF REFERENCE SIGNS

- 1: brake
- 2: parking brake actuator
- 3: brake disc
- 4: brake lining
- 5: mechanics
- 6: brake caliper
- 7: fluid cylinder
- 8: cylinder housing
- 9: piston
- 10: fluid chamber
- 11: spring space
- 12: piston rod
- 13, 13': spring
- 14: spring set
- 15: intermediate element
- 16, 16': first end portion
- 17, 17': second end portion

- d1: first direction
- d2: second direction
- sd: spring direction

## Claims

1. A parking brake actuator (2) for a brake (1) of a vehicle, the parking brake actuator (2) comprising:
a fluid cylinder (7), and
a biasing means, wherein
the fluid cylinder (7) comprises
a cylinder housing (8), and
a piston (9) configured to tightly close a fluid chamber (10) in an inner space of the cylinder housing (8), wherein the piston (9) is connectable to a brake lining (4) of the brake (1), wherein
the biasing means is configured to apply a force to the brake lining (4) in a first direction (d1) such that the brake lining (4) is pressed to an element to be braked in order to generate a braking force, and
the fluid cylinder (7) is configured such that fluid pressure in the fluid chamber (10) applies a pressure force to the piston (9) in a second direction (d2) opposite to the first direction (d1) such that the braking force is released,
wherein
the biasing means is formed as a spring set (14) comprising at least two springs (13, 13'),
**characterized in that**
the spring set (14) is arranged in the fluid chamber (10) and is configured to apply a tensile force in the first direction (d1) to the piston (9),
or
the parking brake actuator (2) has a spring space (11) opposite to the fluid chamber (10) with respect to the piston (9), and
at least one tension spring of the spring set (14), which at least one tension spring is configured to apply a tensile force in the first direction (d1) to the piston (9), is arranged in the fluid chamber (10), and
at least one compression spring of the spring set (14), which at least one compression spring is configured to apply a compression force in the first direction (d1) to the piston (9), is arranged in the spring space (11).

2. The parking brake actuator (2) of claim 1, wherein
the at least two springs (13, 13') are configured to be arranged in a series arrangement.

3. The parking brake actuator (2) of claim 2, wherein
a spring direction (sd) is respectively defined for the at least two springs (13, 13') of the spring set (14) from a first end portion (16, 16') to a second end portion (17, 17') of the individual springs of the spring set (14),
the springs (13, 13') of the spring set (14) are arranged such that the spring directions (sd) are aligned, and
the spring set (14) comprises an intermediate element (15) configured to connect the second end portion (17) of the first spring (13) with the first end portion (16') of the other spring (13') such that the first end portion (16') of the other spring (13') is located at a place being opposite to the spring direction (sd) with respect to the second end portion (17) of the first spring (13).

4. The parking brake actuator (2) of claim 1, wherein the spring space (11) is formed by the cylinder housing (8).

5. The parking brake actuator (2) of anyone of the preceding claims, wherein
the piston (9) comprises a piston rod (12) connectable to the brake lining (4), and
the spring set (14) is configured to move the piston rod (12) out of the cylinder housing (8) such that the parking brake actuator (2) is configured to act as a push type actuator.

6. The parking brake actuator (2) of anyone of claims 1 to 4, wherein
the piston (9) comprises a piston rod (12) connectable to the brake lining (4), and
the spring set (14) is configured to retract the piston rod (12) into the cylinder housing (8) such that the parking brake actuator (2) is configured to act as a pull type actuator.

7. A brake (1) of a vehicle comprising a parking brake actuator (2) according to anyone of the preceding claims, a brake lining (4), and an element to be braked.

## Patentansprüche

1. Feststellbremsen-Betätigungsvorrichtung (2) für eine Bremse (1) eines Fahrzeugs, wobei die Feststellbremsen-Betätigungsvorrichtung (2) Folgendes umfasst:
einen Fluidzylinder (7) und
ein Vorspannmittel, wobei
der Fluidzylinder (7) Folgendes umfasst:
ein Zylindergehäuse (8) und
einen Kolben (9), der dazu konfiguriert ist, eine Fluidkammer (10) in einem Innenraum des Zylindergehäuses (8) dicht zu verschließen, wobei der Kolben (9) mit einem Bremsbelag (4) der Bremse (1) verbindbar ist, wobei
das Vorspannmittel dazu konfiguriert ist, eine Kraft auf den Bremsbelag (4) in einer ersten Richtung (d1) auszuüben, so dass der Bremsbelag (4) gegen ein zu bremsendes Element gedrückt wird, um eine Bremskraft zu erzeugen, und
der Fluidzylinder (7) so konfiguriert ist, dass Fluiddruck in der Fluidkammer (10) eine Druckkraft auf den Kolben (9) in einer zweiten Richtung (d2) ausübt, die der ersten Richtung (d1) entgegengesetzt ist, so dass die Bremskraft gelöst wird,
wobei
das Vorspannmittel als Federsatz (14) ausgebildet ist, das mindestens zwei Federn (13, 13') umfasst,
**dadurch gekennzeichnet, dass**
der Federsatz (14) in der Fluidkammer (10) angeordnet ist und dazu konfiguriert ist, eine Zugkraft in der ersten Richtung (d1) auf den Kolben (9) auszuüben,
oder
die Feststellbremsen-Betätigungsvorrichtung (2) einen Federraum (11) aufweist, der der Fluidkammer (10) in Bezug auf den Kolben (9) gegenüberliegt, und
mindestens eine Zugfeder des Federsatzes (14), wobei die mindestens eine Zugfeder dazu konfiguriert ist, eine Zugkraft in der ersten Richtung (d1) auf den Kolben (9) auszuüben, in der Fluidkammer (10) angeordnet ist, und
mindestens eine Druckfeder des Federsatzes (14), wobei die mindestens eine Druckfeder dazu konfiguriert ist, auf den Kolben (9) eine Druckkraft in die erste Richtung (d1) auszuüben, im Federraum (11) angeordnet ist.

2. Feststellbremsen-Betätigungsvorrichtung (2) nach Anspruch 1, wobei
die mindestens zwei Federn (13, 13') dazu konfiguriert sind, in einer Reihenanordnung angeordnet zu werden.

3. Feststellbremsen-Betätigungsvorrichtung (2) nach Anspruch 2, wobei
für die mindestens zwei Federn (13, 13') des Federsatzes (14) jeweils eine Federrichtung (sd) von einem ersten Endabschnitt (16, 16') zu einem zweiten Endabschnitt (17, 17') der einzelnen Federn des Federsatzes (14) definiert ist,
die Federn (13, 13') des Federsatzes (14) so angeordnet sind, dass die Federrichtungen (sd) fluchten, und
der Federsatz (14) ein Zwischenelement (15) umfasst, das dazu konfiguriert ist, den zweiten Endabschnitt (17) der ersten Feder (13) mit dem ersten Endabschnitt (16') der anderen Feder (13') zu verbinden, so dass sich der erste Endabschnitt (16') der anderen Feder (13') an einer Stelle befindet, die in Bezug auf den zweiten Endabschnitt (17) der ersten Feder (13) der Federrichtung (sd) entgegengesetzt ist.

4. Feststellbremsen-Betätigungsvorrichtung (2) nach Anspruch 1, wobei der Federraum (11) durch das Zylindergehäuse (8) gebildet wird.

5. Elektromechanische Feststellbremsen-Betätigungsvorrichtung (2) nach einem der vorstehenden Ansprüche, wobei
der Kolben (9) eine mit dem Bremsbelag (4) verbindbare Kolbenstange (12) umfasst und
der Federsatz (14) dazu konfiguriert ist, die Kolbenstange (12) so aus dem Zylindergehäuse (8) heraus zu bewegen, dass die Feststellbremsen-Betätigungsvorrichtung (2) so konfiguriert ist, dass sie als eine druckbetätigte Betätigungsvorrichtung fungiert.

6. Feststellbremsen-Betätigungsvorrichtung (2) nach einem der Ansprüche 1 bis 4, wobei
der Kolben (9) eine mit dem Bremsbelag (4) verbindbare Kolbenstange (12) umfasst und
der Federsatz (14) dazu konfiguriert ist, die Kolbenstange (12) so in das Zylindergehäuse (8) zurückzuziehen, dass die Feststellbremsen-Betätigungsvorrichtung (2) als zugbetätigte Betätigungsvorrichtung fungiert.

7. Bremse (1) eines Fahrzeugs, die eine Feststellbremsen-Betätigungsvorrichtung (2) nach einem der vorstehenden Ansprüche, einen Bremsbelag (4) und ein zu bremsendes Element umfasst.

## Revendications

1. Actionneur de frein de stationnement (2) pour un frein (1) d'un véhicule, l'actionneur de frein de stationnement (2) comprenant :
un cylindre de fluide (7), et
un moyen de sollicitation, dans lequel
le cylindre de fluide (7) comprend
un boîtier de cylindre (8), et
un piston (9) configuré pour fermer hermétiquement une chambre de fluide (10) dans un espace intérieur du boîtier de cylindre (8), dans lequel le piston (9) peut être raccordé à une garniture de frein (4) du frein (1), dans lequel
le moyen de sollicitation est configuré pour appliquer une force à la garniture de frein (4) dans une première direction (d1) de sorte que la garniture de frein (4) est appuyée contre un élément à freiner afin de générer une force de freinage, et
le cylindre de fluide (7) est configuré de sorte que la pression de fluide dans la chambre de fluide (10) applique une force de pression au piston (9) dans une seconde direction (d2) opposée à la première direction (d1) de sorte que la force de freinage est relâchée,
dans lequel
le moyen de sollicitation est formé comme un ensemble de ressorts (14) comprenant au moins deux ressorts (13, 13'),
**caractérisé en ce que**
l'ensemble de ressorts (14) est agencé dans la chambre de fluide (10) et est configuré pour appliquer une force de traction dans la première direction (d1) au piston (9),
ou
l'actionneur de frein de stationnement (2) présente un espace de ressort (11) opposé à la chambre de fluide (10) par rapport au piston (9), et
au moins un ressort de traction de l'ensemble de ressorts (14), lequel au moins un ressort de traction est configuré pour appliquer une force de traction dans la première direction (d1) au piston (9), est agencé dans la chambre de fluide (10), et
au moins un ressort de compression de l'ensemble de ressorts (14), lequel au moins un ressort de compression est configuré pour appliquer une force de compression dans la première direction (d1) au piston (9), est agencé dans l'espace de ressort (11).

2. Actionneur de frein de stationnement (2) selon la revendication 1, dans lequel
les au moins deux ressorts (13, 13') sont configurés pour être agencés dans un agencement en série.

3. Actionneur de frein de stationnement (2) selon la revendication 2, dans lequel
une direction de ressort (sd) est définie respectivement pour les au moins deux ressorts (13, 13') de l'ensemble de ressorts (14) d'une première partie d'extrémité (16, 16') à une seconde partie d'extrémité (17, 17') des ressorts individuels de l'ensemble de ressorts (14),
les ressorts (13, 13') de l'ensemble de ressorts (14) sont agencés de sorte que les directions de ressort (sd) sont alignées, et
l'ensemble de ressorts (14) comprend un élément intermédiaire (15) configuré pour raccorder la seconde partie d'extrémité (17) du premier ressort (13) à la première partie d'extrémité (16') de l'autre ressort (13') de sorte que la première partie d'extrémité (16') de l'autre ressort (13') est située à un endroit étant opposé à la direction de ressort (sd) par rapport à la seconde partie d'extrémité (17) du premier ressort (13).

4. Actionneur de frein de stationnement (2) selon la revendication 1, dans lequel l'espace de ressort (11) est formé par le boîtier de cylindre (8).

5. Actionneur de frein de stationnement (2) selon l'une quelconque des revendications précédentes, dans lequel
le piston (9) comprend une tige de piston (12) pouvant être raccordée à la garniture de frein (4), et
l'ensemble de ressorts (14) est configuré pour déplacer la tige de piston (12) hors du boîtier de cylindre (8) de sorte que l'actionneur de frein de stationnement (2) est configuré pour agir comme un actionneur de type poussoir.

6. Actionneur de frein de stationnement (2) selon l'une quelconque des revendications 1 à 4, dans lequel
le piston (9) comprend une tige de piston (12) pouvant être raccordée à la garniture de frein (4), et
l'ensemble de ressorts (14) est configuré pour rétracter la tige de piston (12) dans le boîtier de cylindre (8) de sorte que l'actionneur de frein de stationnement (2) est configuré pour agir comme un actionneur de type à traction.

7. Frein (1) d'un véhicule comprenant un actionneur de frein de stationnement (2) selon l'une quelconque des revendications précédentes, une garniture de frein (4) et un élément à freiner.
